# EUROPÄISCHE PATENTANMELDUNG

(11) **EP 1 829 747 A2**
(43) Veröffentlichungstag der Anmeldung: **05.09.2007**
(21) Anmeldenummer: 07103361.7
(22) Anmeldetag: 01.03.2007
(51) Int. Cl.: B60R 5/04

(54) **Verschiebbarer Ladeboden für ein Kraftfahrzeug, insbesondere Personenkraftwagen**

(30) Priorität: 03.03.2006 DE 102006009886
(71) Anmelder: Wagon Automotive FKT GmbH, 85104 Pförring (DE)
(72) Erfinder: Feigl, Claus-Michael, 85055, INGOLSTADT (DE)
(74) Vertreter: Bioret, Ludovic

(57) **Zusammenfassung**

Ein verschiebbarer Ladeboden (1) für einen Laderaum eines Kraftfahrzeuges, insbesondere eines Personenkraftfahrzeuges, weist eine Ladeplatte (4) auf, welche in fahrzeugfesten, sich parallel zur Fahrzeuglängsrichtung erstreckenden Führungsschienen (2) verschiebbar und feststellbar gelagert ist. Die fahrzeugfesten Führungsschienen (2) sind zur Aufnahme von Befestigungsmitteln (3) zur Ladegutfixierung ausgebildet. An der Ladeplatte (4) sind Schienen (6) zur Aufnahme von Befestigungsmitteln (3) zur Ladegutfixierung angeordnet, welche kompatibel zu den fahrzeugfesten Führungsschienen (2) sind.

## Beschreibung

Die vorliegende Erfindung betrifft einen ausziehbaren Ladeboden für einen Laderaum eines Kraftfahrzeuges, insbesondere eines Personenkraftfahrzeuges, mit einer Ladeplatte, welche in fahrzeugfesten, sich parallel zur Fahrzeuglängsrichtung erstreckenden Führungsschienen, verschiebbar und feststellbar gelagert ist. Die fahrzeugfesten Führungsschienen sind hierbei zur Aufnahme von Befestigungsmitteln zur Ladegutfixierung ausgebildet.

Derartige Ladeböden sind im Stand der Technik, insbesondere für als Kombi ausgeführte Personenkraftwagen bekannt. Ein verschiebbarer Ladeboden ermöglicht ein vereinfachtes Be- und Entladen des Laderaumes, indem das Ladegut auf dem ausgefahrenen Ladeboden positioniert wird. Anschließend kann der Ladeboden mit dem darauf positionierten Ladegut wieder in das Fahrzeuginnere geschoben werden. Insbesondere eine Beladung schlecht zugänglicher Bereiche des Laderaumes, beispielsweise an der Rücksitzbank, ist hierdurch einfach möglich. Ein solcher verschiebbarer Ladeboden ist beispielsweise aus der DE 102 41 687 A1 bekannt. Die Ladeplatte des Ladebodens ist hierbei mit einem Rahmen ausgebildet, an dessen Eckbereichen bzw. Verbindungsknoten Führungsmittel angeordnet sind, über welche die Ladeplatte in fahrzeugfesten Schienen geführt ist. Durch die Anordnung der Führungsmittel in den Eckbereichen sind Anpassungen in Bezug auf Länge und Breite des Ladebodens leicht möglich. Zur Montage des Ladebodens müssen zunächst Führungsschienen fahrzeugfest in dem Laderaum fixiert werden und anschließend die entsprechend angepasste Ladeplatte mit den Führungsmitteln in die Führungsschienen eingesetzt werden.

Die DE 103 33 354 A1 schlägt einen ausziehbaren Ladeboden für die Nachrüstung vor, welcher als eigensteifes, fahrzeugunabhängiges Gebilde aufgebaut ist. Zur Befestigung im Fahrzeug sollen vorhandene Befestigungspunkte, beispielsweise Verzurrösen, Anschraubpunkte der Verzurrösen oder auch bereits im Fahrzeug vorhandene Schienen dienen. Um den ausziehbaren Ladeboden unabhängig von dem Fahrzeug zu gestalten, ist ein ausziehbarer Teil des Ladebodens an entsprechenden Führungsbahnen beweglich angeordnet. Diese Führungsbahnen sind wiederum über eine oder mehrere Querstreben dauerhaft parallel beabstandet. Der Ladeboden muss im Ganzen mit den Schienen in dem Fahrzeug befestigt oder entnommen werden.

Aufgabe der vorliegenden Erfindung ist es, einen verschiebbaren Ladeboden vorzuschlagen, welcher auf einfache Weise im Fahrzeug befestigbar ist. Außerdem soll der Ladeboden auch zur Nachrüstung geeignet sein.

Die Aufgabe wird gelöst mit den Merkmalen des Anspruches 1. Erfindungsgemäß sind die im Fahrzeug fest montierten Führungsschienen zur Aufnahme verschiedener Befestigungsmittel ausgebildet, und der ausziehbare Ladeboden weist eine Ladeplatte auf, an welcher ebenfalls Schienen zur Aufnahme von Befestigungsmitteln zur Ladegutfixierung angeordnet sind. Als Befestigungsmittel zur Ladegutfixierung könne hierbei Verzurrösen, feste oder flexible Haltearme, Gurte oder andere Befestigungsmittel vorgesehen sein, welche in den Schienen verankerbar sind. Das Ladegut kann hierdurch direkt in ausgefahrenem Zustand des Ladebodens auf dem Ladeboden fixiert und gesichert werden, der Ladeboden muss hierzu nicht wieder in das Fahrzeuginnere zurückgefahren werden, um die Ladung dort fahrzeugfest zu befestigen.

Die Erfindung bezieht sich insbesondere auf Personenkraftfahrzeuge bzw. Kombikraftfahrzeuge, in welchen bereits ab Herstellwerk Führungsschienen zur Aufnahme von Befestigungsmitteln angeordnet sind. Die Erfindung ist jedoch ebenso auch für Fahrzeuge geeignet, wenn derartige Befestigungssysteme noch nicht in ihnen angeordnet sind. Der verschiebbare Ladeboden kann dann gemeinsam mit einem derartigen Befestigungssystem in dem Fahrzeug nachgerüstet werden.

Eine besonders vorteilhafte Ausführungsform der Erfindung sieht vor, dass die Schienen der Ladeplatte kompatibel zu den fahrzeugfesten Führungsschienen sind. Hierdurch können die serienmäßig im Fahrzeug vorhandenen Befestigungssysteme sowohl in den fahrzeugfesten Führungsschienen als auch in den Schienen der Ladeplatte angeordnet werden, wodurch sich eine Vielzahl verschiedener Befestigungsmöglichkeiten ergibt. Da die Ladeplatte direkt in den bereits im Fahrzeug vorhandenen Führungsschienen gelagert ist, kann ein derartiger ausziehbarer Ladeboden auf besonders einfache Weise nachgerüstet werden. Eine aufwändige Rahmenkonstruktion für den Ladeboden ist hierdurch nicht notwendig. Der Ladeboden kann ebenso wie die bereits vorgesehenen Befestigungsmittel in die im Fahrzeug vorhandenen Schienen eingesetzt werden oder aus diesen entnommen werden. Aufwändige Verschraubungen zur Fixierung des Ladebodens sind ebenfalls nicht nötig.

Eine besonders vorteilhafte Ausführung der Erfindung sieht vor, dass die Schienen der Ladeplatte seitlich an der Ladeplatte angeordnet sind und in den fahrzeugfesten Führungsschienen verschiebbar und feststellbar gelagert sind. Hierdurch ergibt sich ein besonders einfacher Aufbau des ausziehbaren Ladebodens, da mit einem Bauteil sowohl die Führung der Ladeplatte in den Schienen, wie auch die Anordnung von Befestigungsmitteln zur Ladegutfixierung ermöglicht wird.

Um den Ladeboden besonders komfortabel verschieben zu können, ist es vorteilhaft, wenn die Ladeplatte und/oder die Schienen der Ladeplatte über Laufmittel in den fahrzeugfesten Führungsschienen gelagert sind. Diese Laufmittel können beispielsweise als Gleitelement oder in einer besonders bevorzugten Ausführung als Rollen ausgeführt sein.
Eine weitere vorteilhafte Ausführung der Erfindung sieht vor, dass die Laufmittel fest an den Schienen des Ladebodens angeordnet sind und in den fahrzeugfesten Führungsschienen verschiebbar sind. Der Ladeboden kann hierdurch leicht aus den fahrzeugfesten Führungsschienen entnommen werden, so dass diese voll nutzbar für die vorhandenen Befestigungssysteme sind.

Daneben ist es vorteilhaft, wenn in den fahrzeugfesten Führungsschienen mehrere Raststellungen für den Ladeboden vorgesehen sind bzw. der Ladeboden in mehreren Stellungen feststellbar ist. Der Ladeboden ist hierdurch besonders einfach für verschiedene Ladegüter verwendbar.

Eine weitere Ausführungsform der Erfindung sieht vor, dass die Laufmittel und/oder die Schienen des Ladebodens derart an der Ladeplatte angeordnet sind, dass Lagetoleranzen der fahrzeugfesten Schienen ausgeglichen werden. Dies ist insbesondere vorteilhaft, da die vom Hersteller vorgesehenen Führungsschienen zur Aufnahme von Befestigungsmitteln häufig mit erheblichen Toleranzen zueinander im Laderaum platziert sind.

Besonders vorteilhaft ist es, wenn der Ladeboden bis über die Ladekante des Fahrzeugs hinaus ausziehbar ist, da hierdurch die Beladung besonders ergonomisch erfolgen kann. Beschädigungen der Stoßfänger durch das Ladegut können hierdurch ebenso vermieden werden.

Eine weitere vorteilhafte Weiterbildung der Erfindung sieht vor, dass an einer Unterseite des Ladebodens ausklappbare Beine angeordnet sind, welche den Ladeboden in ausgefahrenem Zustand gegen den Boden abstützen. Dies ermöglicht ein besonders weites Ausfahren des Ladebodens über die Ladekante, da die Belastung nicht vollständig von den Laufmitteln bzw. den fahrzeugfesten Schienen aufgenommen werden muss. Hierdurch ist der Ladeboden beispielsweise auch als Campingtisch nutzbar.

Besonders vorteilhaft ist es hierbei, wenn die Ladeplatte gegenüber den seitlich an ihr angeordneten Schienen verschiebbar ist. Die Ladeplatte selbst kann hierdurch vollständig aus dem Laderaum des Kraftfahrzeuges ausgezogen werden und über ausklappbare Beine abgestützt werden. Fahrzeugseitig kann sich die Ladeplatte in ausgezogenem Zustand gemäß einer weiteren vorteilhaften Ausführung der Erfindung auf einem Schließblech des Laderaumes abstützen. Ein vollständiges Ausfahren der Ladeplatte und ihre Verwendung beispielsweise als Campingtisch ist hierdurch auf besonders einfache Weise möglich. Die Ladeplatte ist dann auch in voll ausgezogenem Zustand sicher abgestützt und dadurch sehr hoch belastbar.

Eine andere Weiterbildung der Erfindung ist dadurch gekennzeichnet, dass der Ladeboden durch Anordnung entsprechender Schienen und/oder Laufmittel an der Ladeplatte an die Führungsschienen verschiedener Fabrikate adaptierbar ist. Einzelne Grundmodule des ausziehbaren Ladebodens können hierdurch für Fahrzeuge unterschiedlicher Hersteller verwendet werden.

Um den ausziehbaren Ladeboden oder auch Befestigungsmittel zur Ladegutfixierung einfach aus den fahrzeugfesten Schienen entnehmen zu können, ist es vorteilhaft, wenn die fahrzeugfesten Schienen Öffnungen zum Einsetzen und Entfernen der Befestigungsmittel aufweisen. Die Befestigungsmittel und/oder der Ladeboden können hierdurch nicht nur durch ein Herausziehen aus den Enden der Schiene entnommen werden, sondern auch in Zwischenpositionen. Besonders vorteilhaft ist es, wenn die Schienen des Ladebodens ebenfalls Öffnungen aufweisen zum Einsetzen von Befestigungsmitteln. Die Enden der Schienen können dann durch eine Verschlusskappe verschlossen werden, wodurch einer Verletzungsgefahr an den Schienenenden vorgebeugt wird.

Eine weitere vorteilhafte Ausführungsform der Erfindung sieht vor, dass der Ladeboden an seinem der Ladekante abgewandten Ende schwenkbar in den Führungsschienen gelagert ist. Werden die der Ladekante zugewandten Laufmittel aus der Schiene entnommen, kann der Ladeboden hierdurch um seine vordere Achse in Fahrzeugquerrichtung geschwenkt werden. Hierdurch wird ein Zugang zu Stauraum oder einem Reserverad unterhalb des Ladebodens gewährt.

Ebenso kann jedoch auch die Ladeplatte schwenkbar in über den an ihr angeordneten seitlichen Schienen sein. Auch hierdurch kann auf einfache Weise der Raum unterhalb des Ladebodens zugänglich gemacht werden.

Eine weitere vorteilhafte Weiterbildung der Erfindung sieht vor, dass der Ladeboden als Sitzfläche für Personen ausgebildet ist. Sind zusätzlich Sicherheitsgurte vorgesehen, können diese Sitzplätze auch während der Fahrt genutzt werden.

Weiterhin ist es vorteilhaft, wenn an der Ladeplatte eine Einrichtung angeordnet ist, zum Betätigen der Verrastung des Ladebodens in den fahrzeugfesten Schienen. Hierzu kann beispielsweise an einer Oberseite der Ladeplatte ein Betätigungsgriff angeordnet sein, welcher über Bowdenzüge die Verrastung des Ladebodens löst. Der Ladeboden kann hierdurch besonders komfortabel betätigt werden.

Weitere Vorteile der Erfindung werden anhand der nachfolgend beschriebenen Ausführungsbeispiele dargestellt. Es zeigen:
- **Figur 1**: Einen erfindungsgemäßen verschiebbaren Ladeboden in einem Laderaum eines Kraftfahrzeuges in perspektivischer Darstellung,
- **Figur 2**: eine schematische Darstellung eines erfindungsgemäßen Ladebodens im Schnitt,
- **Figur 3**: einen erfindungsgemäßen Ladeboden in vollständig ausgezogener Stellung mit einer ausziehbaren Ladeplatte und
- **Figur 4**: eine schematische Darstellung eines erfindungsgemäßen Ladebodens, welcher an einem Ende schwenkbar gelagert ist.

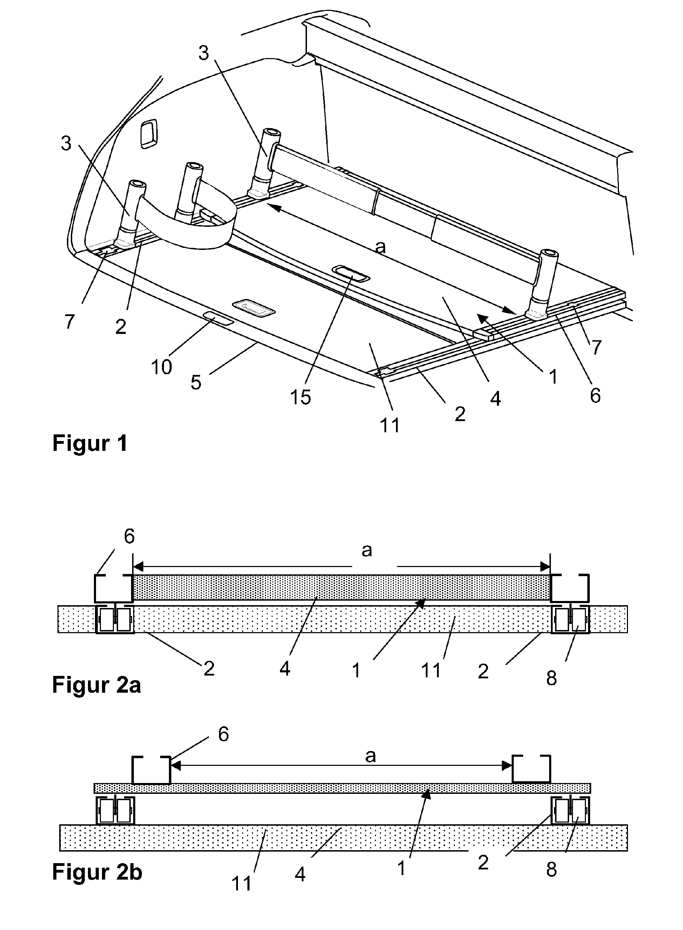

Figur 1 zeigt einen erfindungsgemäßen Ladeboden 1, welcher in einem Laderaum eines Kraftfahrzeuges in fahrzeugfesten, sich parallel zur Fahrzeuglängsrichtung erstreckenden Führungsschienen 2 verschiebbar gelagert ist. Die Schienen 2 sind zur Aufnahme von Befestigungsmitteln 3 zur Ladegutfixierung ausgebildet. In der Regel sind die Schienen 2 flächenbündig mit dem fahrzeugfesten Ladeboden 11 des Kraftfahrzeuges in dem Laderaum angeordnet. Als Befestigungsmittel 3 können beispielsweise Verzurrösen, Haltebänder, Gurte, flexible oder feste Haltearme usw. in den Schienen angeordnet werden und dort festgestellt oder verrastet werden. Erfindungsgemäß kann der verschiebbare Ladeboden 1 direkt in den Schienen 2 gelagert und geführt werden, so dass er besonders einfach im Fahrzeug angebracht werden kann. Er kann ebenso wie die Befestigungselemente 3 auf einfache Weise in die Schienen 2 eingesetzt oder aus diesen entnommen werden.

Der Ladeboden 1 weist eine Ladeplatte 4 auf, welche in den Führungsschienen 2 verschieblich und feststellbar ist. Erfindungsgemäß sind auch an der Ladeplatte 4 Schienen 6 angeordnet, welche ebenfalls zur Aufnahme von Befestigungsmitteln 3 ausgebildet sind. Hierdurch ist es möglich, Ladegut direkt auf dem verschiebbaren Ladeboden 1 zu fixieren und zu sichern. Ein Beladen ist daher sehr komfortabel möglich, denn zur Fixierung des Ladegutes muss der Ladeboden 1 nicht erst wieder in den Laderaum des Kraftfahrzeuges eingeschoben werden. Besonders günstig ist es, wenn die Schienen 6 der Ladeplatte 4 zu den fahrzeugfesten Führungsschienen 2 kompatibel sind. Vorhandene Befestigungsmittel 3, welche zur Verwendung in den fahrzeugfesten Schienen 2 vorgesehen sind, können ebenfalls zur Fixierung von Ladegut auch auf dem Ladeboden 1 verwendet werden. Die fahrzeugfesten Führungsschienen 2 bleiben trotz der Anordnung des verschiebbaren Ladebodens 1 voll nutzbar und können bei eingebautem wie bei ausgebautem Ladeboden 1 weiterverwendet werden. Die fahrzeugfesten Schienen 2 weisen zumindest an Ihren Enden Öffnungen 7 auf, durch welche Befestigungselemente 3 oder der verschiebbare Ladeboden 1 in die Schienen eingesetzt werden können. Derartige Öffnungen 7 können auch an mehreren Stellen der fahrzeugfesten Schienen 2 vorgesehen sein.

Vorzugsweise sind die Schienen 6 seitlich an der Ladeplatte 4 angeordnet und begrenzen diese seitlich. Bevorzugt werden die Schienen 6 über Laufmittel 8 in den fahrzeugsfesten Führungsschienen 2 gelagert, wie in Figur 2 näher dargestellt. Vorzugsweise werden als Laufmittel 8 Rollen fest an den Schienen 6 des Ladebodens 1 angeordnet, so dass die Rollen in den fahrzeugfesten Schienen 2 geführt sind. Anstelle der Rollen 8 können jedoch auch andere Laufmittel, etwa Gleitsteine o.ä. angeordnet sein.

Der Ladeboden 1 bzw. die Laufmittel 8 sind durch entsprechende, hier nicht dargestellte Vorrichtungen in den Schienen 2 feststellbar oder verrastbar. Vorzugsweise sind hierzu in den fahrzeugfesten Schienen 2 mehrere Raststellungen vorgesehen.

Die Verrastung des verschiebbaren Ladebodens 1 bzw. der Laufmittel 8 in den fahrzeugfesten Schienen 2 kann beispielsweise durch einen Bowdenzug oder ein Gestänge betätigt werden. Als Betätigungseinrichtung kann hierzu ein Betätigungsgriff 15 in einem gut zugänglichen Bereich der Ladeplatte 4 angeordnet werden. Vorzugsweise ist der Betätigungsgriff 15 mit einer Griffschale versehen, welche eine besonders komfortable Bedienung ermöglicht. Um den Beladevorgang nicht zu behindern, ist die Griffschale flächenbündig zu der Oberfläche der Ladeplatte 4 positioniert.

Die fahrzeugfesten Schienen 2 sind häufig mit erheblichen Parallelitätsund Lageabweichungen im Laderaum des Kraftfahrzeuges angeordnet. Diese können mehrere Millimeter betragen. Die Laufmittel 8 und/ oder die Schienen 6 des Ladebodens 1 sind daher derart an der Ladeplatte 4 befestigt, dass diese Lageabweichungen ausgeglichen werden.

Figur 2 zeigt eine schematische Darstellung eines erfindungsgemäßen Ladebodens im Schnitt. Im Beispiel der Figur 2a weisen die Schienen 6 des Ladebodens 1 denselben Abstand a zueinander auf, wie die Schienen 2, die fest in dem Fahrzeug angeordnet sind. Sind die fahrzeugfesten Schienen 2 bereits herstellerseitig in dem Fahrzeug vorgesehen, sind diese üblicherweise flächenbündig mit dem fahrzeugfesten Ladeboden 11 in dem Laderaum angeordnet.

Ebenso ist es jedoch auch möglich, dass die Schienen 6 des Ladebodens 1 einen unterschiedlichen Abstand a zu dem der fahrzeugfesten Schienen 2 aufweisen, wie in Figur 2b dargestellt. In diesem Fall sind die Schienen 6 des Ladebodens 1 nicht direkt in den Schienen 2 gelagert, sondern entsprechende Laufmittel 8 sind an der Ladeplatte 4 angeordnet. Hierdurch ist es beispielsweise auch leicht möglich, den Ladeboden 1 durch Anordnung entsprechender Laufmittel 8 auch in Fabrikaten anderer Hersteller zu verbauen. Ebenso kann ein entsprechendes System mit einer verschiebbaren Ladeplatte1 auch in einem Fahrzeug eingebaut werden, in welchem noch keine fahrzeugfesten Schienen 2 zur Ladungssicherung vorgesehen sind. Die Schienen 2 können auch nachträglich auf dem fahrzeugfesten Ladeboden 11 befestigt werden.

Weiterhin zeigt Figur 2, dass die Schienen 6 des Ladebodens 1 ein zu den fahrzeugfesten Schienen 2 kompatibles Profil aufweise, so dass die selben Befestigungselemente in beide Schienen eingesetzt werden können.

Bei den in Figur 2a und 2b gezeigten Darstellungen sind Rollen als Laufmittel 8 innerhalb des Profils der Schienen 2 angeordnet. Ebenso ist es jedoch auch möglich, Rollen oder auch andere Laufmittel so anzuordnen, dass diese auf der Oberfläche des Profils der Schiene laufen.

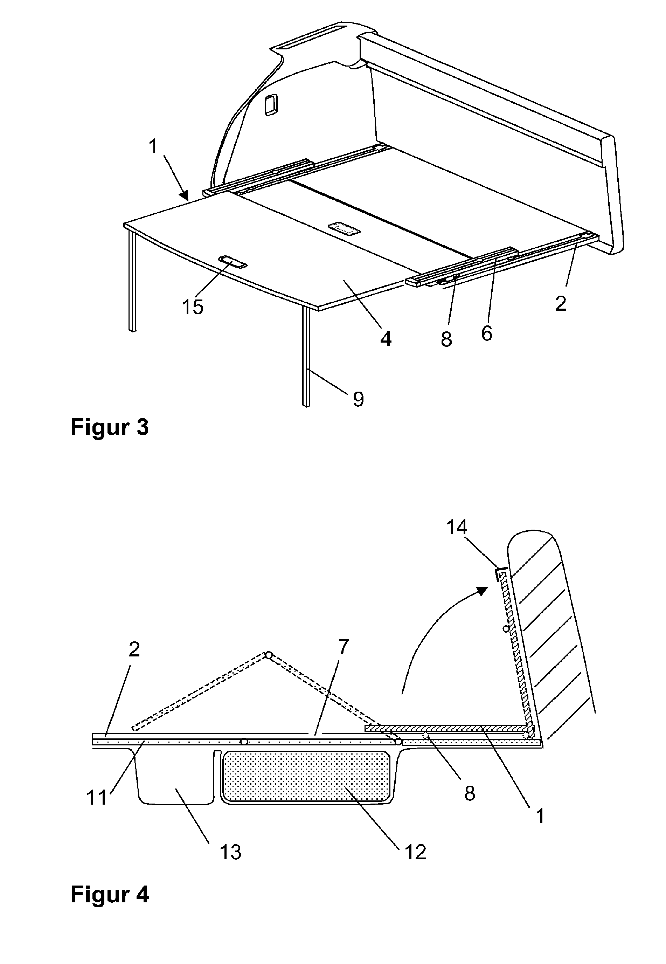

Figur 3 zeigt einen erfindungsgemäßen Ladeboden 1 in vollständig ausgezogener Stellung mit einer ausziehbaren Ladeplatte 4. Der Ladeboden 1 kann nicht nur innerhalb des Laderaumes des Kraftfahrzeuges verfahren werden, sondern ist zusätzlich zumindest teilweise bis über die Ladekante 5 des Fahrzeugs (vgl. Fig.1) hinaus ausziehbar, wodurch ein besonders einfaches Beladen ermöglicht wird. Beschädigungen des Fahrzeugs durch das Ladegut oder Verschmutzung der Kleidung können hierdurch vermieden werden.

Im hier gezeigten Beispiel ist zusätzlich auch die Ladeplatte 4 gegenüber den seitlich an ihr angeordneten Schienen 6 verschiebbar. Hierdurch lässt sich die Ladeplatte 4 nahezu vollständig bis hinter die Ladekante 5 des Kraftfahrzeuges ausziehen. Um die Ladeplatte 4 gegen den Boden anzustützen, können beispielsweise unterhalb der Ladeplatte 4 ausklappbare Beine 9 angeordnet sein. Fahrzeugseitig kann die Ladeplatte 4 auf dem hier verdeckten Schließblech 10 (Fig. 1) des Kofferraumes abgestützt werden. Die Ladeplatte 4 ist hierdurch zusätzlich auch als Campingtisch verwendbar.

Figur 4 zeigt eine schematische Darstellung eines erfindungsgemäßen Ladebodens, welcher an einem Ende schwenkbar gelagert ist. Vorliegend ist der Ladeboden 1 an seinem der Ladekante 5 abgewandten Ende schwenkbar in den Führungsschienen 2 gelagert. Um Zugang zu einem unterhalb des fahrzeugfesten Ladebodens 11 angeordneten Reserverad 12 oder weiterem Stauraum 13 zu gewähren, sind die in Fahrzeugrichtung vorne an dem verschiebbaren Ladeboden 1 angeordneten Laufmittel 8 drehbar an dem Ladeboden 1 angeordnet. Werden die nun die in Fahrzeugrichtung hinten angeordneten Laufmittel 8 des Ladebodens 1 beispielsweise durch eine Öffnung 7 aus der Schiene entnommen, kann der Ladeboden 1 nach oben geschwenkt werden. Die vorderen Laufmittel verbleiben hierzu vorzugsweise in den Schienen 2 .

In dieser hochgeklappten Stellung kann der Ladeboden 1 beispielsweise durch einen an den Rücksitzen angeordneten Hebel 14 verriegelt werden. Der fahrzeugfeste Ladeboden 11 kann hierdurch in gewohnter Weise angehoben werden. Ebenso ist es jedoch auch möglich, die Ladeplatte 4 schwenkbar in den seitlich an ihr angeordneten Schienen 6 anzuordnen. Durch entsprechende Ausbildung der Lagerung der Platte 4 an den Schienen 6, ist es hierbei auch möglich, die Ladeplatte 4 schwenkbar um ihre beiden Enden bezogen auf die Fahrzeuglängsrichtung zu gestalten und gleichzeitig die Verschiebbarkeit in Fahrzeuglängsrichtung zu ermöglichen.
Die Erfindung ist nicht auf die dargestellten Ausführungsbeispiele beschränkt. Abwandlungen und Kombinationen im Rahmen der Patentansprüche fallen ebenfalls unter die Erfindung.

## Patentansprüche

1. Verschiebarer Ladeboden (1) für einen Laderaum eines Kraftfahrzeuges, insbesondere eines Personenkraftfahrzeuges, mit einer Ladeplatte (4), welche in fahrzeugfesten, sich parallel zur Fahrzeuglängsrichtung erstreckenden Führungsschienen (2) verschiebbar und feststellbar gelagert ist, **dadurch gekennzeichnet, dass** die fahrzeugfesten Führungsschienen (2) zur Aufnahme von Befestigungsmitteln (3) zur Ladegutfixierung ausgebildet sind und dass an der Ladeplatte (4) ebenfalls Schienen (6) zur Aufnahme von Befestigungsmitteln (3) zur Ladegutfixierung angeordnet sind.

2. Ladeboden nach Anspruch 1, **dadurch gekennzeichnet, dass** die Schienen (6) der Ladeplatte (4) kompatibel zu den fahrzeugfesten Führungsschienen (2) sind.

3. Ladeboden nach einem der vorhergehenden Ansprüche, **dadurch gekennzeichnet, dass** die Schienen (6) der Ladeplatte (4) seitlich an der Ladeplatte (4) angeordnet sind und in den fahrzeugfesten Führungsschienen (2) verschiebbar und feststellbar gelagert sind

4. Ladeboden nach einem der vorhergehenden Ansprüche, **dadurch gekennzeichnet, dass** die Ladeplatte (4) oder die Schienen (6) der Ladeplatte (4) über Laufmittel (8) in den fahrzeugfesten Führungsschienen (2) gelagert sind.

5. Ladeboden nach einem der vorherigen Ansprüche, **dadurch gekennzeichnet, dass** die Laufmittel (8) fest an der Ladeplatte (4) oder den Schienen (6) der Ladeplatte (4) angeordnet sind und in den fahrzeugfesten Führungsschienen (2) verschiebbar sind.

6. Ladeboden nach einem der vorherigen Ansprüche, **dadurch gekennzeichnet, dass** die Laufmittel (8) Rollen sind.

7. Ladeboden nach einem der vorherigen Ansprüche, **dadurch gekennzeichnet, dass** der Ladeboden (1) in den fahrzeugfesten Führungsschienen (2) in mehreren Stellungen feststellbar oder verrastbar ist.

8. Ladeboden nach einem der vorherigen Ansprüche, **dadurch gekennzeichnet, dass** die Laufmittel und/ oder die Schienen (6) der Ladeplatte (4) derart an der Ladeplatte (4) angeordnet sind, dass Lagetoleranzen der fahrzeugfesten Schienen (2) ausgeglichen werden.

9. Ladeboden nach einem der vorherigen Ansprüche, **dadurch gekennzeichnet, dass** der Ladeboden (1) bis über die Ladekante (5) des Kraftfahrzeuges hinaus ausziehbar ist.

10. Ladeboden nach einem der vorherigen Ansprüche, **dadurch gekennzeichnet, dass** an einer Unterseite des Ladebodens (1) ausklappbare Beine (9) angeordnet sind, welche den Ladeboden (1) in ausgefahrenem Zustand gegen den Boden abstützen.

11. Ladeboden nach einem der vorherigen Ansprüche, **dadurch gekennzeichnet, dass** die Ladeplatte (4) gegenüber den seitlich an ihr angeordneten Schienen (6) verschiebbar ist.

12. Ladeboden nach einem der vorherigen Ansprüche, **dadurch gekennzeichnet, dass** sich die Ladeplatte (4) in ausgezogenem Zustand auf einem Schließblech (10) des Laderaumes abstützt.

13. Ladeboden nach einem der vorherigen Ansprüche, **dadurch gekennzeichnet, dass** der Ladeboden (1) durch Anordnung entsprechender Schienen (6) und/oder Laufmittel (8) an der Ladeplatte (4) an die Führungsschienen (2) verschiedener Fabrikate adaptierbar ist.

14. Ladeboden nach einem der vorherigen Ansprüche, **dadurch gekennzeichnet, dass** die Schienen (6) des Ladebodens (1) Öffnungen (7) aufweisen zum Einsetzen von Befestigungsmitteln (3) zur Ladegutfixierung.

15. Ladeboden nach einem der vorherigen Ansprüche, **dadurch gekennzeichnet, dass** die fahrzeugfesten Führungsschienen (2) Öffnungen (7) aufweisen zum Einsetzen von Befestigungsmitteln (3) oder Laufmitteln (8) des verschiebbaren Ladebodens (1).

16. Ladeboden nach einem der vorherigen Ansprüche, **dadurch gekennzeichnet, dass** der Ladeboden (1) an seinem der Ladekante (5) abgewandten Ende schwenkbar in den Führungsschienen (2) gelagert ist.

17. Ladeboden nach einem der vorherigen Ansprüche, **dadurch gekennzeichnet, dass** die Ladeplatte (4) wenigstens an ihrem der Ladekante (5) abgewandten Ende schwenkbar mit den an ihr angeordneten Schienen (6) verbunden ist.

18. Ladeboden nach einem der vorherigen Ansprüche, **dadurch gekennzeichnet, dass** der Ladeboden (1) oder die Ladeplatte (4) in einer hochgeschwenkten Stellung verriegelbar ist.

19. Ladeboden nach einem der vorherigen Ansprüche, **dadurch gekennzeichnet, dass** der Ladeboden (1) als Sitzfläche für Personen ausgebildet ist.

20. Ladeboden nach einem der vorherigen Ansprüche, **dadurch gekennzeichnet, dass** an der Ladeplatte (4) eine Einrichtung angeordnet ist zum Betätigen der Verrastung des Ladebodens (1) in den fahrzeugfesten Schienen.

21. Ladeboden nach einem der vorherigen Ansprüche, **dadurch gekennzeichnet, dass** die Verrastung des Ladebodens (1) durch ein Gestänge oder einen Bowdenzug betätigbar ist.
